# EUROPEAN PATENT SPECIFICATION

(11) **EP 3 509 425 B1**
(45) Date of publication and mention of the grant of the patent: **22.11.2023**
(21) Application number: 17857642.7
(22) Date of filing: 23.08.2017
(51) Int. Cl.: A23C 19/06, A23C 19/097, A23C 19/068, A23C 9/142

(54) **PRODUCTION METHOD OF SMALL PORTION FETA CHEESE**
VERFAHREN ZUR HERSTELLUNG KLEINER PORTIONEN VON FETAKÄSE
PROCÉDÉ DE PRODUCTION DE PETITES PORTIONS DE FÉTA

(30) Priority: 08.09.2016 TR 201612819; 22.08.2017 TR 201712516
(43) Date of publication of application: 17.07.2019
(73) Proprietor: Sütas Süt Ürünleri Anonim Sirketi, Karacabey/Bursa (TR)
(72) Inventor: ARAT, Murat, 16700 Karacabey/Bursa (TR)
(86) International application number: PCT/TR2017/050402
(87) International publication number: WO 2018/070963

(56) References cited:
- Anonymous: "Crumbled Feta Cheese", GNPD Database, July 2014 (2014-07), pages 1-2, XP55471212, Retrieved from the Internet: URL:http://www.gnpd.com/sinatra/recordpage /2561005/from_search/unuT1Uvoxk/?page=1 [retrieved on 2018-04-27]
- Anonymous: "Camembert Cheese Portions", , September 2014 (2014-09), pages 1-2, XP55471214, Retrieved from the Internet: URL:http://www.gnpd.com/sinatra/recordpage /2661995/from_search/CQGcc6xLPb/?page=1 [retrieved on 2018-04-27]
- Anonymous: "Blue Cheese", , February 2016 (2016-02), pages 1-2, XP55471218, Retrieved from the Internet: URL:http://www.gnpd.com/sinatra/recordpage /3773777/from_search/ovfmjoumB1/?page=1 [retrieved on 2018-04-27]
- KYLE S ET AL: "FETA CHEESE WITH ULTRAFILTRATION RETENTATE", AUSTRALIAN JOURNAL OF DAIRY TECHNOLOGY, DAIRY INDUSTRY ASSOCIATION OF AUSTRALIA, MELBOURNE, AU, vol. 48, no. 1, May 1993 (1993-05), pages 47-48, XP000353914, ISSN: 0004-9433

## Description

### TECHNICAL FIELD

The invention relates to production method of small portion feta cheese which has a weight of 20 to 50 grams, which ripens in a container or a package; untouched by human hands.

### PRIOR ART

Consumers demand one portion (disposable) products for quick service. Small portion products are quickly consumed and they occupy less space so they are easy to store.

In cheese varieties, especially in feta cheese , small portions are produced by cutting of the high-weight cheese with the cutting systems. It is undesirable for the cheese to be processed after production. The risk of contamination increases in each process. The European Patent Office document with application number EP1437047 refers to a production method of feta cheese that ripens in a user package. In this method, a cutting process is performed before it ripens. The above mentioned, cheese continues ripening process in the package after the cutting. The cutting creates a risk of contamination. However, in the method of the invention, 150, 200 and 250 gram-products are mentioned. These weights are exceedingly high for disposable products. The Netherland Patent Office with application number NL7809104 refers to the method of packaging feta cheese in brine. In this method, the smallest portion is specified as 200 grams. With this method, it is not possible to bring the cheese in disposable portions into use without undergoing any cutting process.

As a result, all the above-mentioned problems have made it necessary to innovate in the relevant field.

### OBJECTIVE OF THE INVENTION

The present invention makes it necessary to resolve the above-mentioned problems and to make a technological innovation in the relevant field.

The main objective of the invention is to reveal the structure of the production method of a small portion feta cheese, generally maturated chesses, which has a weight of 20 to 50 grams.

Another objective of the invention is to reveal the structure of the production method of feta cheese which completes the ripening process in its package.

Another objective of the invention is to provide feta cheese production untouched by human hands.

Another objective of the invention is to prevent possible contamination risks during the feta cheese production process.

The present invention is a production method for feta cheese which has a weight of 20 to 50 grams, in order to realize all the objectives mentioned above and which will emerge as a result of the following detailed description. Accordingly, it includes the following steps:
- Filtration process applying for the milk
- Separation process applying for the milk
- Obtaining concentrated mixture which is obtained by applying ultrafiltration process for the milk
- Homogenization of the concentrated mixture
- Adding starter culture to the concentrated mixture
- Adding salt to the concentrated mixture
- Adding rennet to the concentrated mixture
- Filling container with concentrated mixture
- Closing the container with a sealing element which prevents intake of air and liquid from outside.
- Putting the cheese on to ripen in the container

In this way, the production of small portion feta cheese untouched by human hands has been possible.

A preferred embodiment of the invention comprises the step of applying salt directly to the concentrated mixture. Thus, the step of adding salt indirectly to the concentrated mixture over a membrane in the previous technique is removed.

### DETAILED DESCRIPTION OF THE INVENTION

In this detailed description, the invention subject of production method of feta cheese is explained by examples which will not have any limiting effect so that the subject can be understood better.

The invention subject relates to production method of small portion feta cheese, generally maturated chesses, having a weight from 20 to 50 grams, which ripens in a container or a package, untouched by human hands.

Untreated raw milk is kept in tanks and then taken to raw milk balancing tank. The balancing tank provides continuous flow of the production line of the milk with a certain flow rate.

Milk with a certain flow rate is undergone filtration in order to remove harmful substances and particles. Following the filtration, the milk is undergone separation and the cream is separated from the milk.

The milk, of which cream is separated, may be subjected to pasteurization to remove harmful microorganisms therein. The temperature applied here is from 68 to 77°C. After the pasteurization, the milk is cooled again in order to prevent bad taste.

Milk is reheated and prepared for ultrafiltration process. The filtrate which is called "permeate" by ultrafiltration is separated from the milk. This filtrate contains dissolved salts, lactose and acids. The milk with high value components is obtained after the treatment.

Then the milk is undergone homogenization process to prevent the water and fat components from dissociating and becoming two different layers. When the milk is subjected to high pressure, the oil layer in it spoils and it is mixed with the water in milk and a mixture which is called emulsion is formed which can remain more stable and concentrated.

This concentrated mixture may be subjected to pasteurization process again to remove any possible contamination threats. The applied temperature here is 75-85°C. The concentrated mixture is passed to the tank and then the starter cultures are added. 0,4-1,0 gram-salt for the cheese from 20 to 50 grams is scattered as homogenous and added directly to the milk. In the state of art, it has been ensured that the salt is injected to the cheese slowly, being on a fine, permeable membrane which covers the cheese.

The salt added mixture is taken to the balance tank again via pump systems. The rennet from 1 to 6 micrograms is added to the mixture in order to provide feta cheese production from 20 to 50 grams using a customized dosing mechanism. This micron-level dosing requires high precision.

The rennet-added mixture is taken to the balancing tanks and transferred to the containers. The containers are closed with a sealing element which prevents intake of air and liquid from outside.

In a preferred embodiment of the invention, the above mentioned containers are thermoform containers.

In a preferred embodiment of the invention, the above mentioned containers have a volume of between 2 cm³-8 cm³.

Once the containers are filled, the ripening process of the feta cheese begins. The entire ripening process takes place in the container.

## Claims

1. A production method for feta cheese which has a weight of 20 to 50 grams ***characterized in that*** it comprises the following steps;
a) Filtration process applying for the milk
b) Separation process applying for the milk
c) Obtaining concentrated mixture which is obtained by applying ultrafiltration process for the milk
d) Homogenization of concentrated mixture
e) Adding starter culture to the concentrated mixture
f) Adding salt to the concentrated mixture
g) Adding rennet to the concentrated mixture
h) Filling container with concentrated mixture
i) Closing the container with a sealing element which prevents intake of air and liquid from outside.
j) Putting the cheese on to ripen in the container.

2. A Production method according to claim 1 ***characterized in that*** salt is added to the concentrated mixture directly.

3. A Production method according to claim 1 ***characterized in that*** the concentrated mixture is obtained in which fat and protein rate is enhanced by ultrafiltration.

4. A maturated feta cheese which has a weight of 20 to 50 grams obtainable by a production method according to any of preceding claims.

## Patentansprüche

1. Herstellungsverfahren für Fetakäse mit einem Gewicht von 20 bis 50 Gramm, ***dadurch gekennzeichnet, dass*** es die folgenden Schritte umfasst;
a) Durchführung von Filtrationsprozess für Milch
b) Durchführung von Trennverfahren für Milch
c) Erhalten des konzentrierten Gemisches, welches durch Durchführung von Ultrafiltrationsverfahren für Milch erhalten wird
d) Homogenisierung vom konzentrierten Gemisch
e) Hinzufügen von Starterkultur zum konzentrierten Gemisch
f) Hinzufügen von Salz zum konzentrierten Gemisch
g) Hinzufügen von Renette zum konzentrierten Gemisch
h) Füllen von Behälter mit dem konzentrierten Gemisch
i) Schließen des Behälters mittels eines Dichtungselements, welches das Ansaugen von Luft und Flüssigkeit von außen verhindert
j) Reifen lassen von Käse im Behälter.

2. Herstellungsverfahren gemäß Anspruch 1, ***dadurch gekennzeichnet, dass*** das Salz direkt zum konzentrierten Gemisch hinzugefügt wird.

3. Herstellungsverfahren gemäß Anspruch 1, ***dadurch gekennzeichnet, dass*** das konzentrierte Gemisch erhalten wird, in dem der Fett- und Proteingehalt durch Ultrafiltration gesteigert wird.

4. Gereifter Fetakäse mit einem Gewicht von 20 bis 50 Gramm, welcher durch das Herstellungsverfahren nach einem der vorherigen Ansprüche erhalten wird.

## Revendications

1. Méthode de production pour le fromage feta qui a un poids de 20 à 50 grammes ***caractérisée en ce qu**'elle* comprend les étapes suivantes;
a) Appliquer un processus de filtration au lait
b) Appliquer un processus de séparation au lait
c) Obtenir le mélange concentré qui est obtenu en appliquant un processus d'ultrafiltration au lait
d) Homogénéiser le mélange concentré
e) Ajouter la culture de départ au mélange concentré
f) Ajouter le sel au mélange concentré
g) Ajouter la présure au mélange concentré
h) Remplir le récipient avec le mélange concentré
i) Fermer le récipient avec un élément de scellement qui empêche l'entrée d'air et de liquide de l'extérieur
j) Mettre le fromage à mûrir dans le récipient.

2. Méthode de production selon la revendication 1, ***caractérisée en ce que*** le sel est ajouté directement au mélange concentré.

3. Méthode de production selon la revendication 1, ***caractérisée en ce que*** le mélange concentré est obtenu dans lequel le taux de graisse et de protéines est augmenté par ultrafiltration.

4. Fromage feta maturé qui a un poids de 20 à 50 grammes obtenable par une méthode de production selon l'une quelconque des revendications précédentes.
